# EUROPÄISCHE PATENTSCHRIFT

(11) **EP 1 602 426 B1**
(45) Veröffentlichungstag und Bekanntmachung des Hinweises auf die Patenterteilung: **09.10.2013**
(21) Anmeldenummer: 05405301.2
(22) Anmeldetag: 20.04.2005
(51) Int. Cl.: B23B 31/20, B23Q 3/06, B23B 31/40

(54) **Spanneinrichtung zum positionsgenauen Fixieren einer Spannzange an einem Spannfutter**
Clamping device for the precise positional fixation of a collet in a chuck
Dispositif de serrage pour la fixation avec positionnement précis d'une pince de serrage sur un mandrin

(30) Priorität: 04.05.2004 CH 7862004
(43) Veröffentlichungstag der Anmeldung: 07.12.2005
(73) Patentinhaber: Erowa AG, 5734 Reinach (CH)
(72) Erfinder: Kramer, Dietmar, 8114 Daenikon (CH)
(74) Vertreter: Rottmann, Maximilian

(56) Entgegenhaltungen:
- EP-A- 0 263 780
- EP-A- 1 193 017
- WO-A-00/53361
- DD-A1- 219 964
- DE-U- 8 601 499
- DE-U- 29 921 036
- FR-A- 1 382 950
- FR-A- 2 694 222
- GB-A- 601 190
- GB-A- 729 051
- US-A1- 2003 184 028
- PATENT ABSTRACTS OF JAPAN Bd. 0040, Nr. 68 (M-012), 21. Mai 1980 (1980-05-21) & JP 55 031516 A (ITO KAZUICHI), 5. März 1980 (1980-03-05)

## Beschreibung

Die vorliegende Erfindung bezieht sich auf eine Spanneinrichtung mit einem Spannfutter und einer daran fixierbaren Spannzange.

Unter dem Begriff Spannzange wird im vorliegenden Fall eine geschlitzte, mit einem konischen Abschnitt versehene Spannhülse verstanden, welche einen Gegenstand, insbesondere ein zu bearbeitendes Werkstück, durch radiales Aufspreizen oder Zusammenziehen der Spannbacken, festklemmt bzw. festspannt. Gattungsgemässe Spannzangen kommen beispielsweise an Drehbänken zum Einsatz, wo sie mittels eines Gewindes in eine Spindel eingeschraubt werden. Ein grundsätzlicher Nachteil der konventionellen Spannzangen anhaftet besteht darin, dass sowohl deren Winkellage um die Längsachse, -Z-Achse-, wie auch deren Position in Richtung der Längsachse nicht oder zumindest nicht exakt definiert ist. Bei der Bearbeitung von rotationssymmetrischen Werkstücken auf einer Drehbank ist dies von untergeordneter Bedeutung. Andererseits sollen jedoch vermehrt auch Werkstücke mittels Spannzangen an Bearbeitungsmaschinen fixiert werden, die nicht rotationssymmetrisch ausgebildet sind und bei denen insbesondere eine exakte Positionierung in X- und Y-Richtung, sowie ggf. in Z-Richtung, wichtig ist und ggf. auch eine genaue Positionierung bezüglich der Winkellage um die Z-Achse erwünscht ist.

Um Spannzangen in X-, Y- und Z-Richtung wie auch bezüglich der Winkellage um die Z-Achse exakt aufspannen zu können, ist man dazu übergegangen, die jeweilige Spannzange auf einer mit Zentrierelementen versehenen Palette zu befestigen. Die Palette ihrerseits kann dann an einem Spannfutter fixiert werden, welches mit zu der Palette korrespondierenden Zentrierelementen versehen ist.

Aus der FR-A-2 694 222 ist eine Spanneinrichtung mit einer Spannzange bekannt, welche ein Werkzeughalter-Organ, vorzugsweise in Form einer rohrförmigen Muffe, eine scheibenförmige Muffe, die mit dem Werkzeughalter-Organ verbunden werden kann, und eine Vorrichtung, welche in der Lage ist, durch die Maschine zur Rotation gebracht zu werden und die genannte scheibenförmige Muffe in Rotation zu versetzen, aufweist. Dabei weist das Werkzeughalter-Organ, welches als hohles Drehelement, das an seinem Ende geschlossen ist und in die scheibenförmige Muffe eingreift, zwei axial ausgerichtete Teile auf, von denen das eine zur Aufnahme des Endes eines Bohrers ausgebildet ist, während das andere zur Aufnahme des Endes eines Gewindebohrers zum Gewindeschneiden in einer durch den genannten Bohrer erzeugten Ausbohrung ausgebildet ist. Aus dieser Veröffentlichung ergeben sich keinerlei Anhaltspunkte für eine genau Positionierung des Werkzeugs oder eines Werkstücks in X- und Y-Richtung. Aber auch über bezüglich einer Z-Positionierung des Werkzeugs oder eines Werkstücks ergeben sich keine Anhaltspunkte.

Dokument EP 0 263 780 A1, das als nächstliegender Stand der Technik angesehen wird, offenbart eine Spannzange, die auf der Unterseite eine umlaufende Randleiste aufweist. Die Randleiste ist mit mehreren Löcher versehen, mittels deren ein Fixieren und ein genaues Positionieren der Spannzange an einem nicht dargestellten Spannfutter möglich ist.

Die Aufgabe der Erfindung besteht nun darin, eine gemäss dem Oberbegriff des Patentanspruchs 1 ausgebildete Spanneinrichtung zu schaffen, welche direkt, einfach, schnell und positionsgenau an einem Spannfutter fixierbar ist.

Diese Aufgabe wird mit einer Spanneinrichtung gelöst, welche mit den im Kennzeichen des Anspruchs 1 angeführten Merkmalen versehen ist.

Bevorzugte Ausführungsformen des Erfindungsgegenstandes sind in den abhängigen Ansprüchen 2 bis 9 umschrieben.

Die Erfindung wird im Folgenden anhand von Ausführungsbeispielen näher erläutert. In den Zeichnungen zeigen:
- Fig. 1: eine Explosionsdarstellung einer ein Spannfutter sowie eine Spannzange umfassenden Spanneinrichtung;
- Fig. 2: eine Ansicht von unten auf die Spannzange;
- Fig. 3: einen teilweisen Längsschnitt durch das Spannfutter sowie die daran festgespannte Spannzange.
- Fig. 4: eine alternative Ausführungsform einer Spanneinrichtung;
- Fig. 5: einen Längsschnitt durch die Spanneinrichtung gemäss Fig. 4, und
- Fig. 6: eine mit einem Spannzapfen versehene Spannzange.

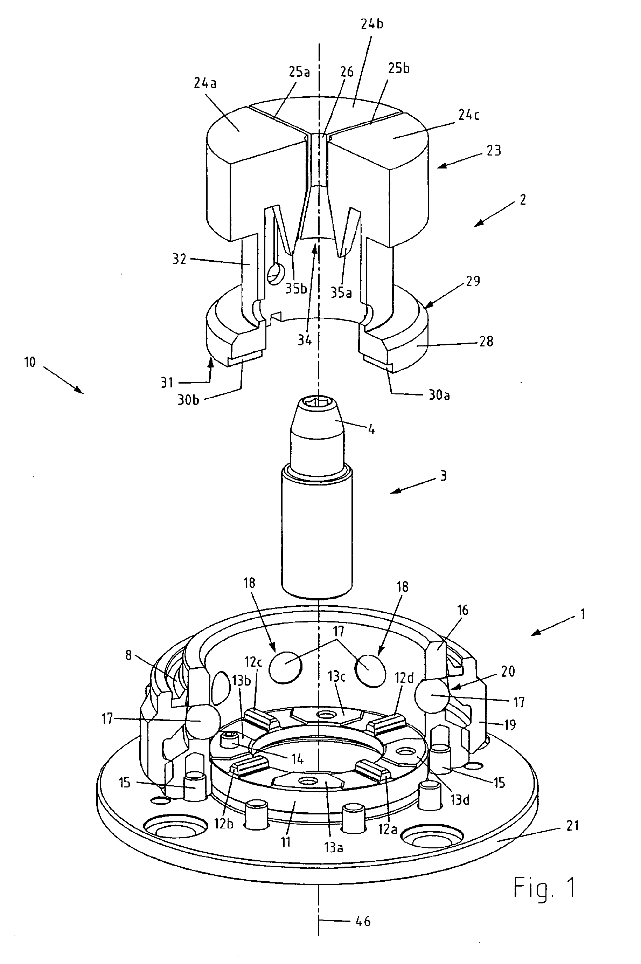

Aus der Fig. 1 ist eine schematisch dargestellte Spanneinrichtung 10 mit einem Spannfutter 1, einer daran festspannbaren Spannzange 2 sowie einem Betätigungsbolzen 3 ersichtlich. Die Z-Achse der Spanneinrichtung 10, welche gleichzeitig auch die Längsmittenachse ist, trägt das Bezugszeichen 46. Obwohl der Betätigungsbolzen 3 separat dargestellt ist, bildet er normalerweise einen Bestandteil des Spannfutters 1.

Das Spannfutter 1 ist mit einem kreisringförmigen Vorsprung 11 versehen, auf dem vier Zentrierzapfen 12a, 12b, 12c, 12d angeordnet sind. Zwischen zwei Zentrierzapfen 12a, 12b, 12c, 12d ist jeweils eine erhabene, als Z-Auflage für die Spannzange 2 dienende Auflagefläche 13a, 13b, 13c, 13d angeordnet. Aus dem Zentrum der einen Auflagefläche 13b steht ein Indexierstift 14 vor. Der Vorsprung 11 wird auf der Aussenseite von einem ringförmig ausgebildeten Kugelhalter 16 umfasst, der mit einer Vielzahl von entlang eines Kreisrings angeordneten Spannkugeln 17 versehen ist und ein Aussengewinde aufweist. Die Spannkugeln 17 sind in Bohrungen 18 des Kugelhalters 16 aufgenommen. Auf das Aussengewinde des Kugelhalters 16 ist eine Überwurfmutter 19 aufgeschraubt, welche auf der Innenseite mit einer konisch zulaufenden Druckfläche 20 zum radialen Verschieben der Spannkugeln 17 versehen ist. Auf der Oberseite der Überwurfmutter 19 ist eine Dichtlippe 8 angeordnet, welche sich auf der Aussenseite des Kugelhalters 16 anlegt. Der Kugelhalter 16 ist mittels Schrauben 15 auf einer Platte 21 befestigt, welche ihrerseits mittels weiteren Befestigungselementen (nicht dargestellt) an einer maschinenseitig vorzusehenden Aufnahme befestigt wird. Der Betätigungsbolzen 3 wird im Innern des Spannfutters 1 angeordnet und ist in Z-Richtung verschiebbar. Die Verschiebung des Betätigungsbolzens 3 erfolgt vorzugsweise pneumatisch. Auf der Vorderseite ist der Betätigungsbolzen 3 mit einer konisch zulaufenden Druckfläche 4 versehen, welche dem radialen Aufweiten der Spannzange 2 dient, wie nachfolgend noch näher erläutert wird.

Die in teilweise geschnittener Darstellung gezeigte Spannzange 2 ist im wesentlichen hohlzylindrisch ausgebildet. Der Spannzangenvorderteil 23 ist in bekannter Weise mit Schlitzen 25a, 25b versehen, welche den Spannzangenvorderteil 23 in radial aufspreizbare bzw. zusammendrückbare Klemmbacken 24a, 24b, 24c unterteilen. Die Spannzange 2 weist insgesamt vier Schlitze und vier Klemmbacken auf. Natürlich kann die Spannzange auch mit weniger oder mehr als den genannten vier Schlitzen versehen werden. In den Spannzangenvorderteil ist eine zentrale Bohrung 26 eingelassen, deren Durchmesser den Anforderungen entsprechend gewählt wird.

Auf ihrer Rückseite weist die Spannzange 2 eine umlaufende Schulter 28 auf, die auf der Unterseite eine kreisringförmig verlaufende Stirnfläche 31 bildet. Die Stirnfläche 31 dient als Z-Anschlag beim Fixieren der Spannzange 2 am Spannfutter 1. Die Schulter 28 ist auf der Oberseite mit einer schräg verlaufenden Druckfläche 29 versehen, an welcher die Spannkugeln 17 des Spannfutters 1 anzugreifen bestimmt sind, um die Spannzange 2 am Spannfutter 1 zu fixieren. In die untere Stirnfläche 31 der Spannzange 2 sind Zentriernuten 30a, 30b eingelassen, die in der Lage und Form mit den am Spannfutter 1 angeordneten Zentrierzapfen 12a, 12b, 12c, 12d korrespondierenden und dem Positionieren der Spannzange 2 in X- und Y-Richtung wie auch bezüglich der Winkellage um die Z-Achse dienen. Von den vier Zentriernuten sind aus dieser Darstellung jedoch nur die zwei vorderen Zentriernuten 30a, 30b ersichtlich. In die Stirnfläche 31 der Spannzange 2 ist im weiteren eine aus dieser Darstellung nicht ersichtliche Indexieröffnung eingelassen, die der Aufnahme des am Spannfutter 1 angeordneten Indexierstifts 14 dient. Ein den Mittelteil der Spannhülse 2 bildender Schaft 32 verbindet die Schulter 28 mit dem Spannzangenvorderteil 23.

Auf der Rückseite ist der Spannzangenvorderteil 23 mit einer sich konisch verjüngenden Vertiefung 34 versehen. Diese Vertiefung 34 beginnt innerhalb des Schafts 32 auf der Rückseite des Spannzangenvorderteils 23 und führt bis zu der Bohrung 26. Die Vertiefung 34 wird durch vorstehende und sich konisch erweiternde Wandteile 35a, 35b begrenzt. Die Wandteile 35a, 35b werden durch die Schlitze 25a, 25b im Spannzangevorderteil 23 unterteilt. Insgesamt sind vier solcher durch Schlitze unterteilten Wandteile vorhanden. Wird der Betätigungsbolzen 3 in die Vertiefung 34 hineingedrückt, so spreizen sich die Klemmbacken 24a, 24b, 24c in radialer Richtung auf.

Es versteht sich, dass die Anordnung der Zentriernuten und der Zentrierzapfen auch umgekehrt erfolgen könnte, indem die Zentrierzapfen an der Spannzange und die Zentriernuten an dem Spannfutter angeordnet werden.

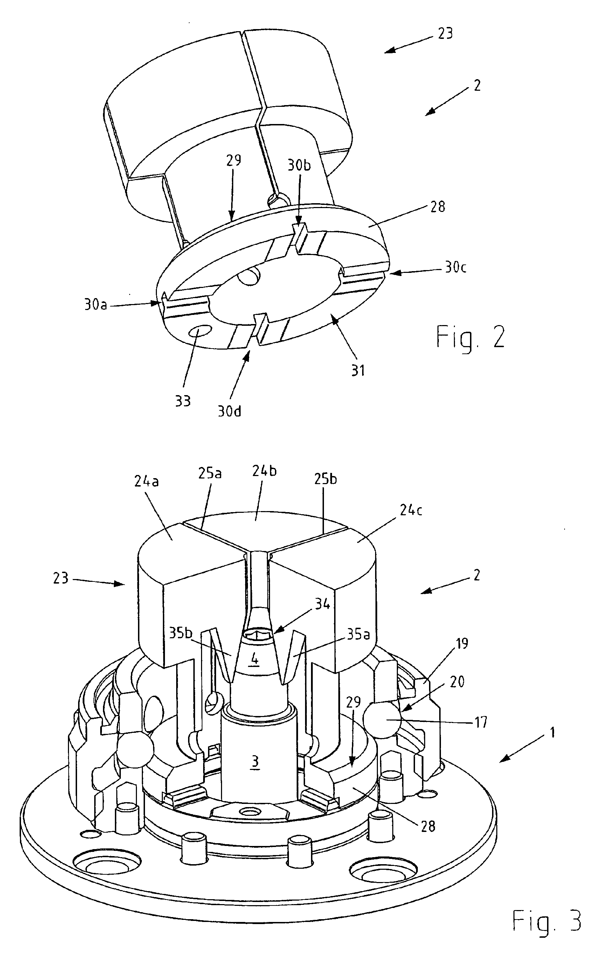

Die Fig. 2 zeigt die Spannzange 2 in einer Ansicht von unten. Aus dieser Darstellung ist insbesondere ersichtlich, dass vier Zentriernuten 30a, 30b, 30c, 30d in die dem Spannzangenvorderteil 23 abgewandte Stirnseite 31 der Schulter 28 eingelassen sind, und dass die Schulter 28 gleichzeitig mit einer Druckfläche 29 für die Spannkugeln 17 des Spannfutters versehen ist. Im weiteren ist die zur Aufnahme des Indexierstiftes 14 dienende Indexierbohrung 33 ersichtlich, welche eine grobe Ausrichtung der Lage um die Z-Achse ermöglicht und somit ein bezüglich der groben Winkellage um die Z-Achse korrektes Fixieren der Spannzange 2 am Spannfutter 1 sicherstellen soll. Die zwischen den Zentriernuten 30a, 30b, 30c, 30d verlaufenden, kreisringförmigen Flächenabschnitte der Stirnfläche 31 bilden den Z-Anschlag für die Spannzange 2 beim Festspannen am Spanfutter 1. Indem die Zentriernuten 30a, 30b, 30c, 30d, in axialer Richtung gesehen, im Bereich der Druckfläche 29 in die Schulter 28 der Spannzange 2 eingelassen sind und die Spannzange 2 an dieser Druckfläche 29 durch eine Mehrzahl von entlang eines Kreisrings angeordnete Spannkugeln 17 in Z-Richtung fixiert wird, kann das Spannfutter 2 zum einen sehr genau positioniert werden und zum anderen hohe Kräfte, insbesondere auch in radialer Richtung, aufnehmen.

Die Fig. 3 zeigt einen teilweisen Längsschnitt durch das Spannfutter 1 sowie die daran festgespannte Spannzange 2. Die Spannzange 2 wird durch die an der Druckfläche 29 der Schulter 28 angreifenden Spannkugeln 17 am Spannfutter 1 fixiert. Die Spannkugeln 17 ihrerseits werden durch die Druckfläche 20 der Überwurfmutter 19, welche letztere manuell in die hier dargestellte Wirkstellung gedreht wurde, radial nach innen gedrückt. Indem die Spannkugeln 17 auf die Druckfläche 29 der Schulter 28 der Spannzange 2 drücken, wird die Letztere in Z-Richtung gegen das Spannfutter 1 gedrückt. Der zum radialen Aufspreizen der Spannzange 2 vorgesehen Betätigungsbolzen 3 ist in der nach oben geschobenen Wirkstellung gezeigt. Beim Hochschieben des Betätigungsbolzens 3 legt sich dessen konische Druckfläche 4 an der Wandfläche der Vertiefung 34 bzw. an den sich konisch erweiternden Wandteilen 35a, 35b an, wodurch die Klemmbacken 24a, 24b, 24c des Spannzangenvorderteils 23 aufgespreizt werden. Eine derart ausgebildete Spanneinrichtung 10 eignet sich insbesondere zum Fixieren von Werkstücken, die durch ein radiales Aufspreizen der Klemmbacken an der Spannzange 2 fixiert werden. Das an der Spannzange 2 zu fixierende Werkstück (nicht dargestellt) wird dazu über die Spannzange 2 gestülpt, so dass dieses durch das radiale Aufspreizen der Spannzange 2 am Umfang der Spannzange 2 fixiert wird. Die Aussenkontur der Spannzange 2 wird dazu vorzugsweise an die Innenkontur einer Ausnehmung in dem zu fixierenden Werkstück angepasst. Eine andere Variante besteht darin, dass das zu fixierende Werkstück mit einem Adapter versehen wird, der an die Aussenkontur der Spannzange angepasst ist, oder dass das Werkstück selber auf die Aussenkontur der Spannzange abgestimmt wird.

Solange der Betätigungsbolzen 3 in die Vertiefung 34 der Spannzange 2 hineingedrückt wird, ist das Werkstück an der Spannzange fixiert, während das Werkstück nach dem Zurückziehen des Betätigungsbolzens 3 von der Spannzange 2 entfernt werden kann, da sich die Spannbacken federelastisch in die unbelastete Ausgangsstellung zurückbewegen.

Grundsätzlich gilt, dass beim Festspannen der Spannzange 2 am Spannfutter 1 die vier Zentrierzapfen 12a, 12b, 12c, 12d des Spannfutters 1 in die Zentriernuten 30a, 30b, 30c, 30d der Spannzange 2 eindringen und dabei die Spannzange 2 gegenüber dem Spanfutter 1 in X- und in Y-Richtung sowie bezüglich der Winkellage um die Z-Achse ausrichten. Die Zentriernuten 30a, 30b, 30c, 30d der Spannzange 2 sind derart dimensioniert und auf die Zentrierzapfen 12a, 12b, 12c, 12d des Spannfutters 1 abgestimmt, dass bei lose aufgesetzter Spannzange 2 bzw. Hülse 3 die Zentrierzapfen 12a, 12b, 12c, 12d des Spannfutters 1 soweit in die Zentriernuten 30a, 30b, 30c, 30d der Spannzange 2 bzw. Hülse 1 eindringen, dass zwischen den Z-Auflageflächen 13a, 13b, 13c, 13d des Spannfutters 1 und der ringförmigen Stirnseite 31 der Spannzange 2 ein Spalt in der Grössenordnung von 0.01 bis 0.1 mm besteht. Beim Festziehen der Überwurfmutter 19 wird dieser Spalt aufgehoben, indem die Zentrierzapfen 12a, 12b, 12c, 12d des Spannfutters 1 um den Betrag des Spalts tiefer in die Zentriernuten 30a, 30b, 30c, 30d der Spannzange 2 eindringen. Dabei macht man sich die Elastizität des Materials - Stahl- zu nutze, indem die Spannzange 2 durch die eindringenden Zentrierzapfen im Bereich ihrer Nuten 30a, 30b, 30c, 30d geringfügig aufgeweitet wird. Diese Deformation spielt sich im Bereich der Materialelastizität ab, wodurch gänzlich auf Zentrierelemente verzichtet werden kann, die in Z-Richtung federelastisch nachgiebig sind. Nach dem Festziehen der Überwurfmutter 19 liegt die Spannzange 2 mit ihrer kreisringförmig verlaufenden Stirnfläche 31 auf den als Z-Auflage dienenden Auflageflächen 13a, 13b, 13c, 13d des Spannfutters 1 auf, wodurch die Lage der Spannzange 2 gegenüber dem Spannfutter 1 auch in Z-Richtung eindeutig definiert ist.

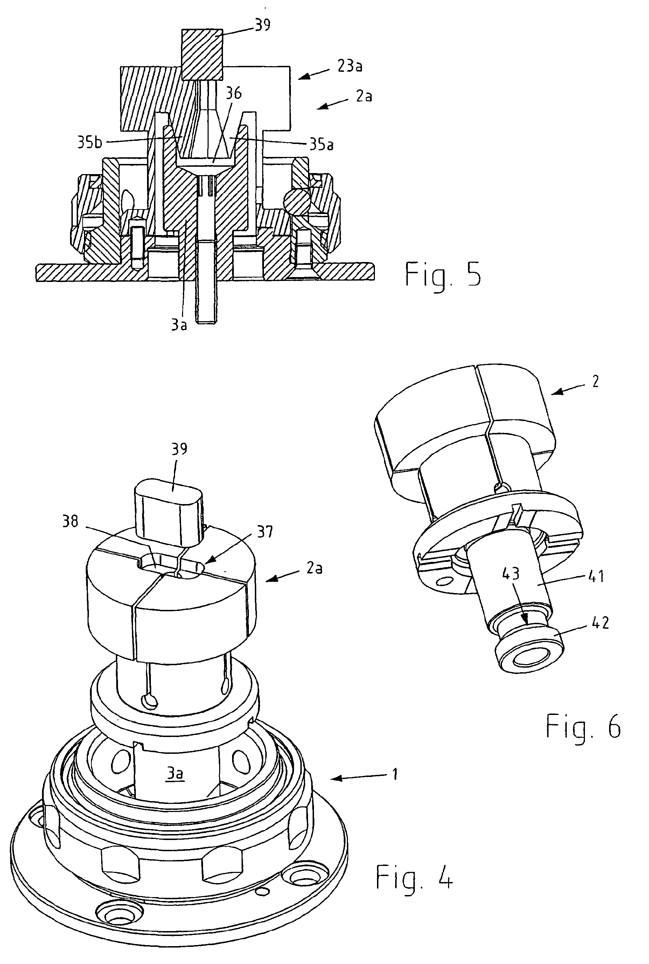

Fig. 4 zeigt eine alternative Ausführungsform einer Spanneinrichtung in perspektivischer Ansicht. Die Spannzange 2a ist mit einer ovalen Ausnehmung 37 zum Fixieren eines entsprechenden Werkstücks 39 versehen. Der Boden 38 der Ausnehmung 37 bildet den Z-Anschlag für das Werkstück 39. In diesem Fall wird das Werkstück 39 nicht durch radiales Aufspreizen der Klemmbacken an der Spannzange 2a fixiert, sondern durch ein radiales Zusammenziehen derselben. Dieses radiale Zusammenziehen der Klemmbacken wird durch einen alternative Ausbildung des Betätigungsbolzen 3a bewirkt, wie nachfolgend anhand der Fig. 5 erläutert wird.

Aus der Fig. 5, welche einen Längsschnitt durch die Spanneinrichtung gemäss Fig. 4 zeigt, ist der Betätigungsbolzen 3a ersichtlich. Anstelle einer konischen Druckfläche ist der Betätigungsbolzen 3a mit einer Ausnehmung 36 versehen, deren Innenseite weitgehend mit der Aussenkontur der die Ausnehmung in der Spannzange 2a begrenzenden Wandteile 35a, 35b übereinstimmt. Die Innenseite dieser Ausnehmung 36 legt sich beim Hochfahren des Betätigungsbolzens 3a an der Aussenseite der konischen Wandteile 35a, 35b an, wodurch sich die Spannbacken zusammenziehen, so dass das Werkstück 39 in der Spannzange 2a festgeklemmt wird.

Die Fig. 6 zeigt eine alternative Ausführungsform einer Spannzange 2. Die Spannzange 2 ist mit einem Spannzapfen 41 versehen, der zum Einziehen und Fixieren der Spannzange 2 am Spannfutter vorgesehen ist. Der Spannzapfen 41 ist am unteren Ende mit einer umlaufenden Schulter 42 versehen, die eine abgeschrägte Druckfläche 43 aufweist, an der Spannkugeln des Spannfutters angreifen können. Es versteht sich, dass das Spannfutter auf eine mit einem Spannzapfen 41 versehene Spannzange 2 abgestimmt sein muss, indem die Spannkugeln entsprechend weit unten am Spannfutter angeordnet werden müssen. Der Spannzapfen 41 ist vorzugsweise hohlzylindrisch ausgebildet, so dass durch dessen Innenseite ein Betätigungsbolzen zum Aufspreizen bzw. Zusammenziehen der Spannbacken geführt werden kann.

Die erfindungsgemäss ausgebildete Spannzange 2 kann direkt, einfach, schnell und positionsgenau an einem Spannfutter 1 fixiert werden.

Das Vorsehen einer manuell aufschraubbaren Überwurfmutter 19 zum Fixieren der Spannzange 2 hat den Vorteil, dass die Spanneinrichtung 10 sehr kompakt aufgebaut ist und kostengünstig hergestellt werden kann. Anstelle einer manuell anzubringenden Überwurfmutter zum Fixieren der Spannzange könnte das Spannfutter 1 jedoch auch mit einem federbelasteten, pneumatisch oder hydraulisch verschiebbaren Spannkolben versehen werden, der auf der Innenseite mit einer konisch zulaufenden Druckfläche zum radialen Verschieben der Spannkugeln versehen ist. Sofern eine Spannzange ohne Spannzapfen verwendet wird, kann die gesamte Spanneinrichtung sehr kompakt aufgebaut werden.

## Patentansprüche

1. Spanneinrichtung (10) mit einem Spannfutter (1) und einer daran fixierbaren Spannzange (2), wobei das Spannfutter mit mehreren Zentrierelementen (12a, 12b, 12c, 12d) sowie Spannmitteln zum Fixieren der Spannzange versehen ist und die Spannzange (2) auf der dem Spannfutter zuzuwendenden Rückseite mit weiteren Zentrierelementen (30a, 30b, 30c, 30d) versehen ist, welche mit den am Spannfutter (1) korrespondierend angeordneten Zentrierelementen (12a, 12b, 12c, 12d) zusammenzuarbeiten bestimmt sind, um die Spannzange (2) beim Fixieren gegenüber dem Spannfutter (1) zumindest in X- und Y-Richtung positionsgenau auszurichten, und wobei die Spannzange (2) oder ein mit ihr verbundener Spannzapfen (41) mit einer Druckfläche (29, 43) versehen ist, an welcher die Spannmittel des Spannfutters (1) anzugreifen bestimmt sind, um die Spannzange (2) am Spannfutter (1) zu fixieren.

2. Spanneinrichtung (10) nach Anspruch 1, **dadurch gekennzeichnet, dass** die Spannzange (2) oder der mit ihr verbundene Spannzapfen (41) mit einer umlaufenden Schulter (28, 42) versehen ist, an der die Druckfläche (29, 43) und/oder die Zentrierelemente (30a, 30b, 30c, 30d) angeordnet ist/sind.

3. Spanneinrichtung (10) nach Anspruch 2, **dadurch gekennzeichnet, dass** die Zentrierelemente (30a, 30b, 30c, 30d) in die dem Spannzangenvorderteil (23) abgewandte Stirnseite (31) der Schulter (28) eingelassen sind oder daraus hervorstehen, und dass die zwischen den Zentrierelementen (30a, 30b, 30c, 30d) verlaufende Stirnseite (31) der Schulter (28) zumindest teilweise die Z-Auflage für die Spannzange (2) beim Festspannen am Spanfutter (1) bildet.

4. Spanneinrichtung (10) nach Anspruch 2 oder 3, **dadurch gekennzeichnet, dass** in die Stirnseite (31) der Spannzange (2), zum Positionieren derselben in X- und Y-Richtung wie auch bezüglich der Winkellage um die Z-Achse (46), zumindest drei gleichmässig entlang eines Kreisrings angeordnete Zentriernuten (30a, 30b, 30c, 30d) eingelassen sind und/oder zumindest drei Zentriernocken daraus hervorragen.

5. Spanneinrichtung (10) nach Anspruch 4, **dadurch gekennzeichnet, dass** das Spannfutter (1) mit zumindest drei Zentrierelementen (12a, 12b, 12c, 12d) versehen ist, welche mit den an der Spannzange (2) angeordneten Zentrierelementen (30a, 30b, 30c, 30d) bezüglich der Lage und Ausbildung korrespondieren, und dass das Spannfutter (1) mit einem mit Spannkugeln (17) versehenen Spannmechanismus zum Fixieren der Spannzange (2) am Spannfutter (1) versehen ist.

6. Spanneinrichtung (10) nach Anspruch 5, **dadurch gekennzeichnet, dass** der Spannmechanismus des Spannfutters (1) eine Überwurfmutter (19) umfasst, welche auf der Innenseite mit einer konisch zulaufenden Druckfläche (20) zum radialen Verschieben der Spannkugeln (17) versehen ist.

7. Spanneinrichtung (10) nach einem der vorhergehenden Ansprüche, **dadurch gekennzeichnet, dass** die Rückseite des Spannzangenvorderteils (23) mit einer durch radial verlaufende Schlitze (25a, 25b) unterteilten und sich verjüngenden Vertiefung (34) versehen ist, in welche ein am Spannfutter (1) angeordneter Betätigungsbolzen (3) derart hineinschiebbar ist, dass sich die Spannzange (2) radial aufweitet.

8. Spanneinrichtung (10) nach einem der Ansprüche 1 bis 6, **dadurch gekennzeichnet, dass** die Rückseite des Spannzangenvorderteils (23a) mit einer Ausnehmung versehen ist, die durch vorstehende und sich konisch erweiternde Wandteile (35a, 35b) begrenzt wird, welch letztere durch radial verlaufende Schlitze (25a, 25b) unterteilt sind, und über welche ein am Spannfutter (1) angeordneter, mit einer Ausnehmung (36) versehener Betätigungsbolzen (3a) derart schiebbar ist, dass sich die Spannzange (23a) radial zusammenzieht.

9. Spanneinrichtung (10) nach einem der vorhergehenden Ansprüche, **dadurch gekennzeichnet, dass** die Spannzange (2) mit einer Indexierbohrung (33) zum Bestimmen der groben Lage um die Z-Achse (46) versehen ist.

## Claims

1. A clamping fixture (10) comprising a chuck (1) and a collet (2) locatable relative thereto, said chuck being provided with a plurality of centering elements (12a, 12b, 12c, 12a) as well as clamping means for locating the collet (2) and the collet (2) is provided on its rear side facing the chuck (1) with further centering elements (30a, 30b, 30c, 30d) designed to cooperate with the centering elements (12a, 12b, 12c, 12a) correspondingly arranged on the chuck (1) to align the collet (2) when being located relative to the chuck (1) at least in the X and Y direction precisely positioned and wherein the collet (2) or a clamping spigot (41) connected to the latter is provided with a thrusting face (29, 43) defined to engage the clamping means of the chuck (1) to locate the collet (2) relative to the chuck (1).

2. The clamping fixture (10) as set forth in claim 1, **characterized in that** said collet (2) or said clamping spigot (41) connected thereto is provided with a circumferential shoulder (28, 42) on which the thrusting face (29, 43) and/or the centering elements (30a, 30b, 30c, 30d) is/are arranged.

3. The clamping fixture (10) as set forth in claim 2, **characterized in that** said centering elements (30a, 30b, 30c, 30d) are inset in the end side (31) of the shoulder (28, 42) facing away from the front part (23) of the collet or protruding therefrom and that the end side (31) of the shoulder (28, 42) oriented between the centering elements (30a, 30b, 30c, 30d) forms at least in part the Z mount for the collet (2) on being clamped to the chuck (1).

4. The clamping fixture (10) as set forth in claim 2 or 3, **characterized in that** inset in the end side (31) of the collet (2) for positioning the latter in the X and Y direction as well as relative to the angular position about the Z axis (46) are at least three centering grooves (30a, 30b, 30c, 30d) arranged equally spaced along a circular ring and/or at least three centering dogs protrude therefrom.

5. The clamping fixture (10) as set forth in claim 4, **characterized in that** said chuck (1) is provided with at least three centering elements (12a, 12b, 12c, 12a) correspondingly positioned and configured as to the centering elements (30a, 30b, 30c, 30d) arranged on the collet (2) and that the chuck (1) is provided with a clamping mechanism provided with clamping balls (17) for locating the collet (2) relative to the chuck (1).

6. The clamping fixture (10) as set forth in claim 5, **characterized in that** said clamping mechanism of the chuck (1) includes a screwcap (19) provided on the inside with a conically tapered thrusting face (20) for radially shifting the clamping balls (17).

7. The clamping fixture (10) as set forth in any of the preceding claims, **characterized in that** said rear side of the front part (23) of the collet is provided with a tapered recess (34) subdivided by radially oriented slots (25a, 25b), into which an actuating pin (3) is arranged on the chuck (1) for sliding insertion such that the collet (2) is radially expanded.

8. The clamping fixture (10) as set forth in any of the claims 1 to 6, **characterized in that** said rear side of the front end (23a) of the collet is provided with a recess defined by protruding and conically expanding wall parts (35a, 35b) which subdivide the latter by radially oriented slots (25a, 25b) and via which an actuating pin (3a) arranged on the chuck (1) and provided with a recess (36) is shiftable such that the front end (23a) of the collet is radially contracted.

9. The clamping fixture (10) as set forth in any of the preceding claims, **characterized in that** said collet (2) is provided with an indexing bore (33) for determining the coarse position about the Z axis (46).

## Revendications

1. Dispositif de serrage (10) comprenant un mandrin de serrage (1) et une pince de serrage (2) pouvant être fixée audit mandrin de serrage, sachant que le mandrin de serrage est pourvu de plusieurs éléments de centrage (12a, 12b, 12c, 12d) ainsi que de moyens de serrage servant à fixer la pince de serrage et que la pince de serrage (2) est pourvue, sur le côté arrière à tourner vers le mandrin de serrage, d'autres éléments de centrage (30a, 30b, 30c, 30d), lesquels sont prévus pour coopérer avec les éléments de centrage (12a, 12b, 12c, 12d) disposés de manière correspondante au niveau du mandrin de serrage (1) afin d'orienter, de manière précise en positionnement, au moins dans la direction X et dans la direction Y, la pince de serrage (2) lors de la fixation par rapport au mandrin de serrage (1), et sachant que la pince de serrage (2) ou un tourillon de serrage (41) relié à cette dernière est pourvu(e) d'une face de pression (29, 43), avec laquelle les moyens de serrage du mandrin de serrage (1) sont prévus pour venir en prise afin de fixer la pince de serrage (2) au niveau du mandrin de serrage (1).

2. Dispositif de serrage (10) selon la revendication 1, **caractérisé en ce que** la pince de serrage (2) ou le tourillon de serrage (41) relié à cette dernière est pourvu(e) d'un épaulement (28, 42) périphérique, au niveau duquel sont disposés les faces de pression (29, 43) et/ou les éléments de centrage (30a, 30b, 30c, 30d).

3. Dispositif de serrage (10) selon la revendication 2, **caractérisé en ce que** les éléments de centrage (30a, 30b, 30c, 30d) sont encastrés dans le côté frontal (31) ou font saillie, opposé à la partie avant de la pince de serrage (23), de l'épaulement (28), et **en ce que** le côté frontal (31), s'étendant entre les éléments de centrage (30a, 30b, 30c, 30d), de l'épaulement (28) forme au moins en partie l'appui Z pour la pince de serrage (2) lors de la fixation par serrage au niveau du mandrin de serrage (1).

4. Dispositif de serrage (10) selon la revendication 2 ou 3, **caractérisé en ce qu'**au moins trois rainures de centrage (30a, 30b, 30c, 30d) disposées de manière homogène le long d'un anneau de cercle sont encastrées dans le côté frontal (31) de la pince de serrage (2), aux fins du positionnement de cette dernière dans la direction X et dans la direction Y tout comme en termes de position angulaire autour de l'axe Z (46), et/ou **en ce qu'**au moins trois cames de centrage font saillie dudit côté frontal.

5. Dispositif de serrage (10) selon la revendication 4, **caractérisé en ce que** le mandrin de serrage (1) est pourvu d'au moins trois éléments de centrage (12a, 12b, 12c, 12d), lesquels correspondent aux éléments de centrage (30a, 30b, 30c, 30d) disposés au niveau de la pince de serrage (2) en termes de position et de réalisation, et **en ce que** le mandrin de serrage (1) est pourvu d'un mécanisme de serrage pourvu de billes de serrage (17) et servant à fixer la pince de serrage (2) au niveau du mandrin de serrage (1).

6. Dispositif de serrage (10) selon la revendication 5, **caractérisé en ce que** le mécanisme de serrage du mandrin de serrage (1) comprend un écrou d'accouplement (19), qui est pourvu sur le côté intérieur d'une face de pression (20) s'étendant de manière conique et servant à déplacer par coulissement de manière radiale les billes de serrage (17).

7. Dispositif de serrage (10) selon l'une quelconque des revendications précédentes, **caractérisé en ce que** le côté arrière de la partie avant de la pince de serrage (23) est pourvu d'un creux (34) se rétrécissant et divisé par des entailles (25a, 25b) s'étendant de manière radiale, dans lequel creux un boulon d'actionnement (3) disposé au niveau du mandrin de serrage (1) peut être introduit par glissement de telle manière que la pince de serrage (2) s'élargit de manière radiale.

8. Dispositif de serrage (10) selon l'une quelconque des revendications 1 à 6, **caractérisé en ce que** le côté arrière de la partie avant de la pince de serrage (23a) est pourvu d'un évidement, qui est délimité par des parties de paroi (35a, 35b) faisant saillie et s'élargissant de manière conique, lesquelles parties de paroi sont divisées par des entailles (25a, 25b) s'étendant de manière radiale et par lesquelles un boulon d'actionnement (3a) disposé au niveau du mandrin de serrage (1), pourvu d'un évidement (36) peut être glissé de telle manière que la pince de serrage (23a) se resserre de manière radiale.

9. Dispositif de serrage (10) selon l'une quelconque des revendications précédentes, **caractérisé en ce que** la pince de serrage (2) est pourvue d'un alésage d'indexation (33) servant à déterminer de manière sommaire la position autour de l'axe Z (46).
